# EUROPEAN PATENT SPECIFICATION

(11) **EP 1 021 292 B1**
(45) Date of publication and mention of the grant of the patent: **09.10.2002**
(21) Application number: 97926665.7
(22) Date of filing: 16.05.1997
(51) Int. Cl.: B29D 29/08

(54) **IMPROVED METHOD TO CURE ENDLESS TRACK BELTS AND APPARATUS THEREFOR**
VERFAHREN UND VORRICHTUNG ZUR HÄRTUNG VON ENDLOSEN RAUPENBÄNDERN
TECHNIQUE AMELIOREE DE DURCISSEMENT DE BANDES DE CHENILLES ET DISPOSITIF CORRESPONDANT

(43) Date of publication of application: 26.07.2000
(73) Proprietor: THE GOODYEAR TIRE & RUBBER COMPANY, Akron, Ohio 44316-0001 (US)
(72) Inventor: FELDMANN, Thomas, Brian, St Mary's, OH 45885 (US)
(74) Representative: Leitz, Paul
(86) International application number: US9708665
(87) International publication number: WO98051482

(56) References cited:
- EP-A- 0 308 550
- US-A- 4 575 445
- US-A- 5 536 464

## Description

### Field of the Invention

This invention relates to the curing of large endless track belts such as are illustrated in U.S. Patent Nos. 4,721,498; 5,211,609; 5,575,729 and 5,536,464.

### Background of the Invention

The use of double platen presses for curing endless belts and conveyor belts has been known for some time. Two major problems were generally encountered, the containment of the rubber within the molds and the movement of the reinforcement within the belts such as tension members. In U.S. Patent No. 5,110,274, there is disclosed a mold for vulcanizing cogged V-belts including cooling water ports at each end of the mold and also cog peak cavities at each end which are narrower than the central part of the mold. In U.S. Patent No. 5,536,464, there is described a set of molds and subplates and a method of curing rubber track. The first mold has cooling water ports at each end to provide a plurality of semi-vulcanized lugs at each end with fully vulcanized lugs between. The second set of molds have no cooling ports and the process is designed to have the semi-vulcanized lugs from adjacent sections within the cavities of the second set of molds. The apparatus and method of the '464 patent are complicated and tedious.

### Summary of the Invention

The present invention provides a much simpler method of curing rubber track belts using a minimum of equipment and with a fewer number of steps. In accordance with the practice of the present invention, there is provided a method for curing endless track belts comprising:
a) providing a pair of upper and lower heated mold assemblies (A, B) having an entrance end, an exit end, cooling water ports (4, 5) at each end, outer tread lug cavities (2) in one half of a mold assembly, inner guide lug cavities (1) in the other half of the mold assembly and a pair of fully supporting indexing wheels (8) on opposing ends of the mold assemblies (A, B);
b) placing a green track belt carcass (7) in between the mold halves and around the indexing wheels (8), the green track belt carcass (7) having a slab of tread lug compound built up on the outer surface thereof; wherein the slab stock is applied as single pieces or a continuous sheet of rubber repeatably wrapped around the outer surface;
c) placing non-preformed slugs of inner guide lug compound (10) in the inner guide lug cavities of the upper mold assembly (A) and on the carcass (7) opposite the guide lug cavities (1) of the lower mold assembly (B);
d) turning on the water to all the cooling ports (4, 5);
e) closing the mold halves at such a designated high pressure to form the tread lugs (2) and guide lugs (1) in a series of alternating bumps between high pressure and a much lower or no pressure to form the lugs;
f) applying a constant lower pressure to allow the lugs (1, 2) to expand into the cavities (1, 2) and the molds to separate until the first heat is complete;
g) opening the mold halves and indexing the belt (7) a distance x which is less than the length of the molds until the lugs (1, 2) that were formed in the cavities (1, 2) next to the cold entrance end are aligned with the cavities at the exit end;
h) shutting off the cooling water port (5) at the exit end of the molds;
i) placing additional slugs of guide lug compound (10) in the empty cavities (1) of the upper mold (A) and on the carcass (7) opposite the empty cavities (1) of the lower mold (B) and repeating steps e, f and g for the second and subsequent heats prior to the final heat, proceeding to step (j) for the final heat;
j) shutting off the cold water port (4) to the entrance ends of the molds;
k) placing additional slugs of guide lug compound (10) in the empty cavities of the upper mold (A) and on the carcass (7) opposite the empty cavities (1) of the lower mold (B) and repeating steps e and f to form the final track belt; and
l) opening the mold halves and removing the track belt from the mold assemblies (A, B).

Claims 7 and 13 are directed to modified methods of curing endless track belts.

There is also provided an apparatus for curing large endless belts comprising:
a) a pair of double platen mold assemblies (A, B) having outer tread lug cavities (2), inner guide lug cavities (1), entrance ends, exit ends and cooling water ports (4, 5) at each end;
b) pressure cylinders to impart a cavity pressure of 1.4 to 8.4 MPa; and
c) fully supporting indexing wheels (8); wherein the indexing wheels provide support across the entire width of the belt with a force sufficient to maintain an even tension across the width of the belt to support the inner reinforcement (12) and not allow it to move during the curing cycle, the apparatus characterized by:
   an indexing wheel (8) having a round drum (15) with removable shelves (16) and secondary support surfaces (17), the removable shelves (16) providing support for the green belt carcass (7) that is tensioned prior to and during the first heat, absent the presence of inner guide lugs (1) and; wherein the shelves (16) are removed after the first heat, when inner guide lugs (1) are present, to allow the inner guide lugs (1) to enter the cavity and the bottom (11) of the guide lugs are supported by the secondary surface.

In the preferred embodiment apparatus, the force applied by the fully supporting indexing wheels (8) is 0.14 to 3.5 MPa.

### Brief Description of the Drawings

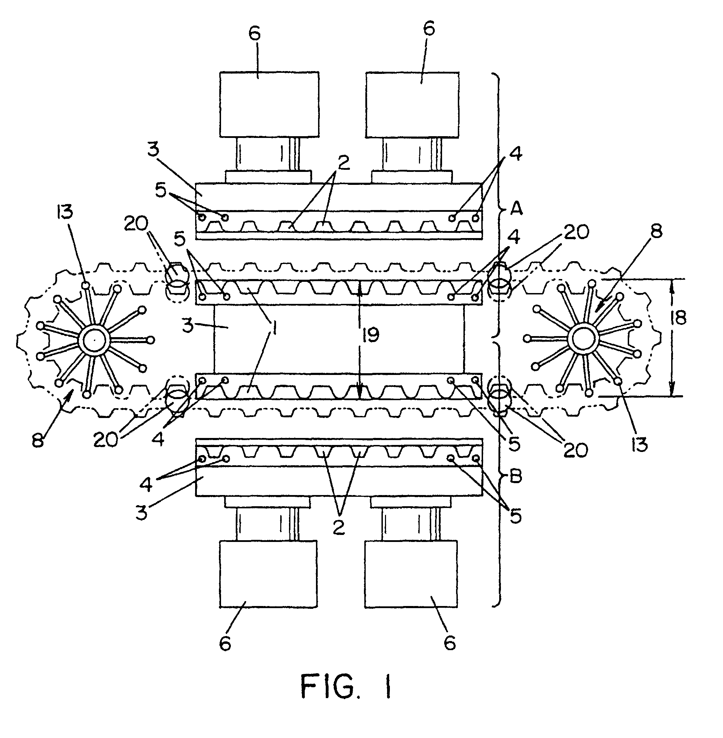

Figure 1 is an elevational cross-sectional view of the apparatus used in the method of the present invention, showing the finished track in phantom lines.

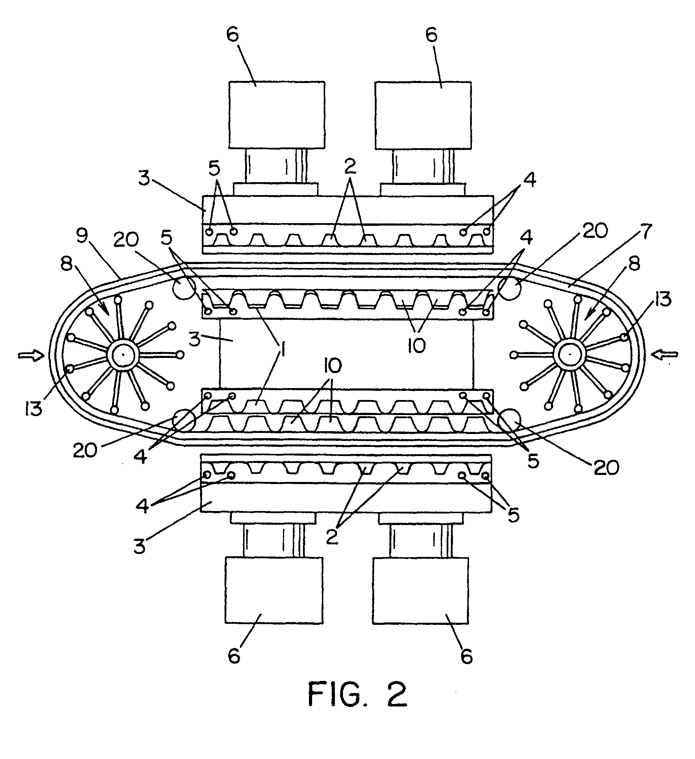

Figure 2 shows the apparatus of Figure 1 with a built-up carcass and guide lug slugs added prior to the first heat cycle.

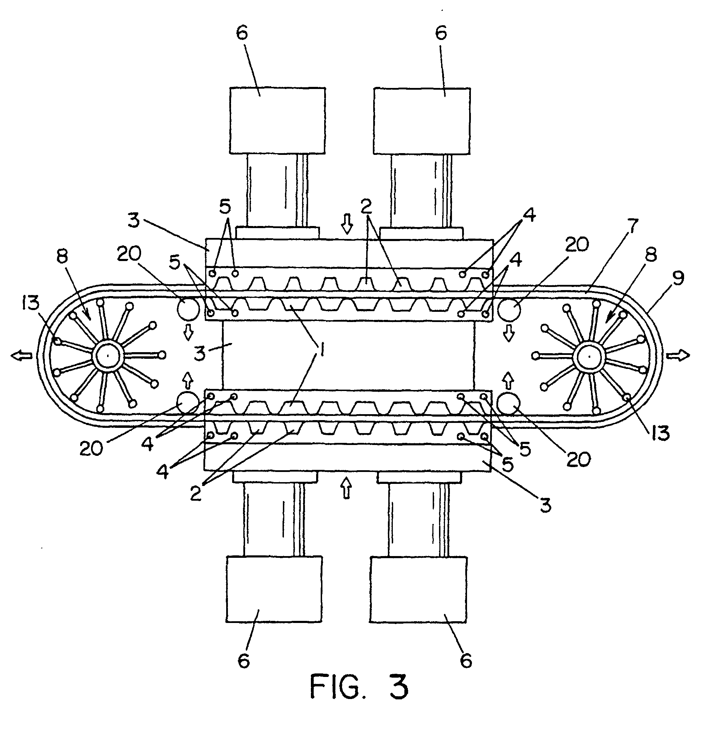

Figure 3 shows the condition of the apparatus during the first heat cycle.

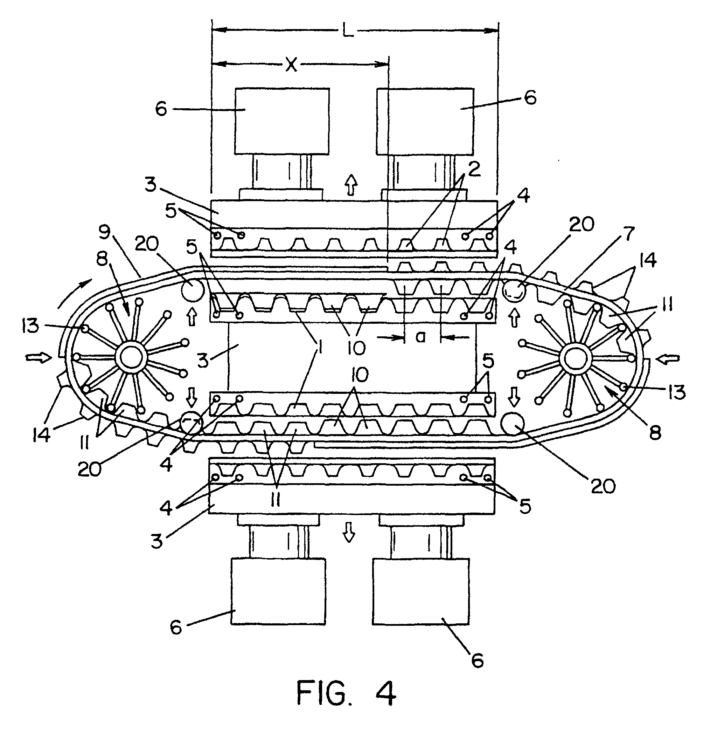

Figure 4 illustrates the indexing of the track belt after the first heat cycle and preparation for the second heat cycle.

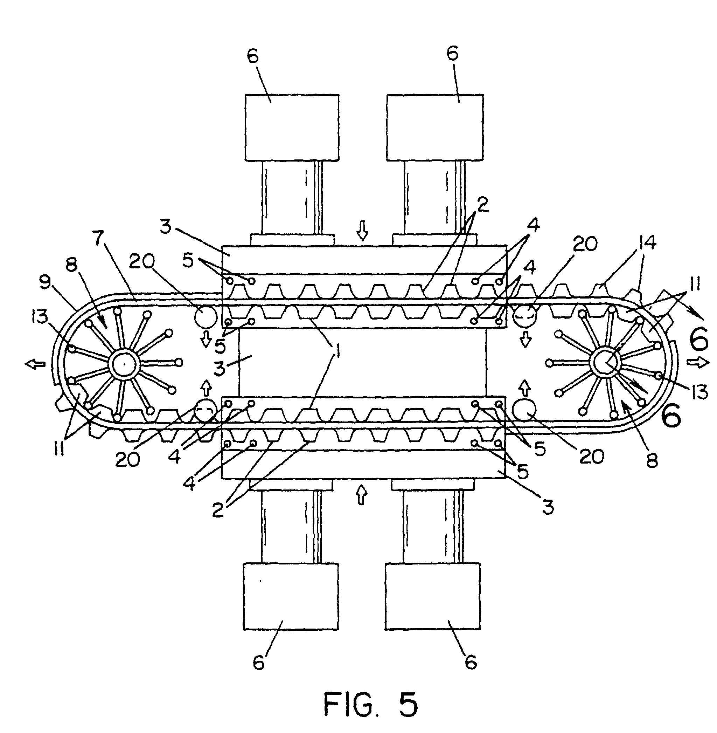

Figure 5 illustrates the mold assemblies closed during the second heat cycle.
Figure 6 is a cross-sectional view of that portion of the track and fully supporting indexing wheel taken along line 6-6 of Figure 5.
Figures 7(a) and 7(b) illustrate a cross-sectional view of a preferred embodiment of an indexing wheel similar to Figure 6.

### Description of the Invention

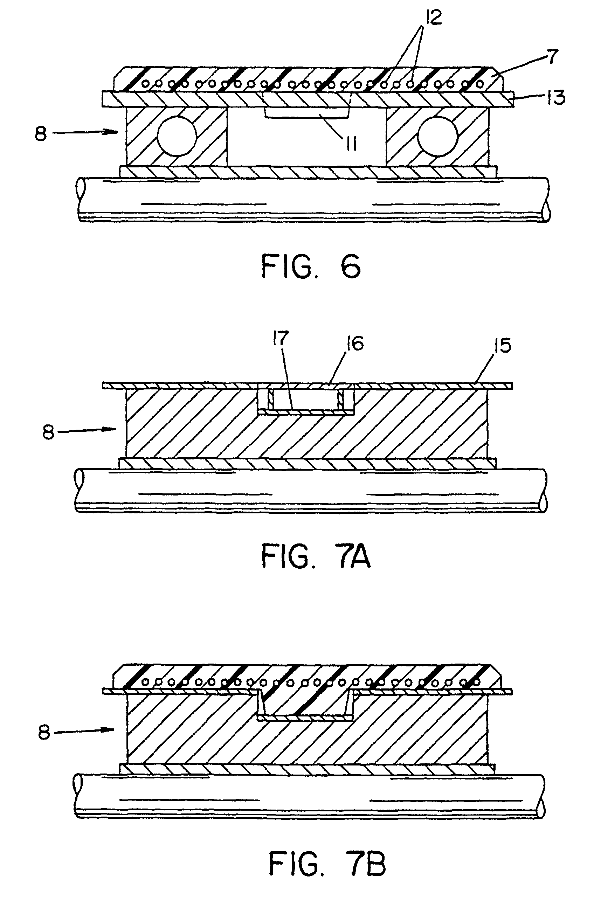

The invention comprises a method of curing elastomeric endless track belts while solving the problems of the prior art methods of having the elastomers flow out of the sides and the ends of the molds as well as within the carcass of the track belt, thereby causing movement of the inner reinforcement. The method provides a pair of upper (A) and lower (B) mold assemblies having entrance ends and exit ends with cooling water ports (4, 5) at each end. There are outer tread lug cavities (2) on one-half of each of the mold assemblies and inner guide lug cavities (1) in the other half of the mold assemblies. At each opposing end of the mold assemblies are located fully supporting index wheels (8) as illustrated in Figures 6 and 7 which maintain an even tension across the width of the belt.

Inner guide lug cavities (1) are locaied in one-half of the molds while outer tread lug cavities (2) are located in the other half of the molds. The exit end cooling water ports (4) and the entrance end cooling water ports (5) are located such as to maintain a selected number of cavities below 100°C in order to prevent full wlcanization of the predetermined number of the guide lug cavities (1) and tread lug cavities (2).

A green track belt carcass (7) similar to that disclosed in U.S. Patent Nos. 5,211,609 and 5,575,729 generally having a longitudinal cable reinforcement (shown as reference numeral 12 in Figures 6 and 7b) is provided and placed around the indexing wheels (8) between the mold cavities (1 and 2). There are several ways to provide the compound for filling the tread lugs (2) and the guide lugs (1). Slugs of the compounds can be provided either as non-premolded extruded pieces which are cut to length, the shape of the lug cross-sectional contour. At the ends they are cut on a bias to more approximate the ends of the cavities, or the slugs may be premolded similar to what is illustrated in U.S Patent No. 5,536,464. Another way to provide lug compounds to the inner surface of the carcass or the outer surface of the carcass is to buildup the surface of the carcass with slab stock applied either as single pieces or as a continuous sheet of rubber repeatedly wrapped around either the inner or outer surface of the green belt. The preferred method in the instant invention is to use a built-up slab of compound for the outer tread lug and to use non-premolded compound slugs for the inner guide lugs.

The indexing wheels (8) are fully supporting in that they maintain an even tension across the width of the belt to support the inner reinforcement (12) and not allow it to move during the curing operation. Figure 6 illustrates one embodiment of the indexing wheel (8) having wheel bars (13) which cover the entire bottom surface of the inner surface of the belt (7) except for the lug (11), while Figures 7a and 7b illustrate an indexing wheel (8) having a round drum (15) with removable shelves (16) and secondary support surfaces (17). The removable shelves (16) provide support for the green belt carcass that is tensioned prior to and during the first heat, absent the presence of inner guide lugs. The shelves (16) are removed after the first heat, when inner guide lugs are present, to allow the inner guide lugs to enter the cavity and the bottom of the guide lugs (11) are supported by the secondary surface (17).

The fully supporting indexing wheels (8) maintain a force on the green track belt (7) of 0.14 MPa to 3.5 MPa, preferably 0.17 MPa to 5.2 MPa during the curing cycle.

With the green belt carcass (7) having a slab (9) of tread lug compound built-up thereon is between the mold halves, non-preformed slugs of inner guide lug compound (10) are placed in the inner guide lug cavities of the upper mold assembly (A) and on the carcass (7) opposite the guide lug cavities (1) of the lower mold assembly (B). Cooling water is turned on to both the exit end water ports (4) and the entrance water ports (5). Curing is provided by platens (3) at temperatures of 95°C to 165°C. Pressure is provided by pressure cylinders (6) and pressure is applied in a series of bumps which may be defined by applying the pressure for a predetermined amount of time followed by releasing the pressure either to no pressure or a somewhat lower pressure than the initial high pressure. This bumping action goes to carefully form the outer tread lugs (14) and the inner guide lugs (11) while preventing distortion or damage to the lug compounds. Cavity pressure during this bumping action can range from 1.4 MPa to 8.4 MPa, while a range of 2 MPa - 3.3 MPa is preferred. Following the series of bumps, a constant lower pressure is applied to allow the lugs to expand into the cavities and to allow the molds to separate or gap in order to prevent the flow of the compound out of the ends of the mold. This lower pressure can range between 0.35 MPa - 1.3 MPa, while it is preferred that the range be between 0.5 MPa - 1 MPa. This pressure is maintained until the first heat is completed, resulting in the curing of the lugs which are in the central portion of the molds while those cavities which are in the cold regions, at the ends of the molds, are in various states of semi-vulcanization.

After the first heat is completed, the mold halves are separated and the belt is indexed a distance x which is between 1a and L-na, where a = the pitch length of the inner guide lugs, L is the length of the mold and n is the number of pitches in the cold end. As such, the lugs which were formed in the cavities next to the cold end are aligned with the cavities at the cold exit end of the molds (4). At this point, the cooling water is shut off the exit ends of the molds (4) in order to allow for the complete wlcanization of those lugs which were previously at the entrance end for the first heat. This condition is allowed to exist for the second to the final heat.

Additional slugs of guide lug compound are placed in the empty cavities of the upper molds and on the carcass opposite the empty cavities of the lower molds for each of the remaining heats. For the final heat, the semi-vulcanized lugs from the exit ends of the molds from the first heat are placed into the entrance cavities of the molds and the cooling water is turned off the entrance end cooling water ports (5) in order to allow the completion of the vulcanization. Each heat provides the bumping action at the high pressure to form the lugs followed by the lower pressure for the completion of the cure cycle. This process has been found to prevent the flow of material out of the ends of the molds as well as to prevent the distortion of the reinforcement within the carcass of the belt. After the final heat, the finished track is removed from the mold assemblies.

As can be appreciated, when using non-preformed lugs for the outer tread, the lugs of the tread compound are placed on the carcass of the green track belt in the upper mold assembly and in the tread lug cavities of the lower mold assembly.

Wheel diameter (18) of the indexing wheel is always equal to or less than the thickness (19) of the center lug mold/platen package. This aids in alignment of the green belt (7) to the mold cavities and insures that the closing of the lug molds does not cause an overtightening of the belt. Expanding rollers (20) are provided to disengage the lugs from the cavities during the indexing operation.

## Claims

1. A method for curing endless track belts comprising:
a) providing a pair of upper and lower heated mold assemblies (A,B) having an entrance end, an exit end, cooling water ports (4,5) at each end, outer tread lug cavities (2) in one half of a mold assembly, inner guide lug cavities (1) in the other half of the mold assembly and a pair of fully supporting indexing wheels (8) on opposing ends of the mold assemblies (A,B);
b) placing a green track belt carcass (7) in between the mold halves and around the indexing wheels (8), the green track belt carcass (7) having a slab of tread lug compound built up on the outer surface thereof; wherein the slab stock is applied as single pieces or a continuous sheet of rubber repeatably wrapped around the outer surface;
c) placing non-preformed slugs of inner guide lug compound (10) in the inner guide lug cavities of the upper mold assembly (A) and on the carcass (7) opposite the guide lug cavities (1) of the lower mold assembly (B);
d) turning on the water to all the cooling ports (4,5);
e) closing the mold halves at such a designated high pressure to form the tread lugs (2) and inner guide lugs (1) in a series of alternating bumps between high pressure and a much lower or no pressure to form the lugs;
f) applying a constant lower pressure to allow the lugs (1,2) to expand into the cavities (1,2) and the molds to separate until the first heat is complete;
g) opening the mold halves and indexing the belt (7) a distance x which is less than the length of the molds until the lugs (1,2) that were formed in the cavities (1,2) next to the cold entrance end are aligned with the cavities at the exit end;
h) shutting off the cooling water port (5) at the exit end of the molds;
i) placing additional slugs of inner guide lug compound (10) in the empty cavities (1) of the upper mold (A) and on the carcass (7) opposite the empty cavities (1) of the lower mold (B) and repeating steps e, f and g for the second and subsequent heats prior to the final heat, proceeding to step (j) for the final heat;
j) shutting off the cold water port (4) to the entrance ends of the molds;
k) placing additional slugs of inner guide lug compound (10) in the empty cavities of the upper mold (A) and on the carcass (7) opposite the empty cavities (1) of the lower mold (B) and repeating steps e and f to form the final track belt; and
l) opening the mold halves and removing the track belt from the mold assemblies (A,B).

2. The method of claim 1 wherein the high pressure is between 1.4 MPa - 8.4 MPa.

3. The method of claim 1 wherein the high pressure is between 2.0 MPa - 3.3 MPa.

4. The method according to claim 1 wherein the lower pressure is between 0.35 MPa - 1.3 MPa.

5. The method according to claim 2 wherein the lower pressure is between 0.35 MPa - 1.3 MPa.

6. The method according to claim 3 wherein the lower pressure is between 0.5 MPa - 1.0 MPa.

7. The method for curing endless track belt comprising:
providing a pair of upper and lower heated mold assemblies (A,B) having an entrance end, an exit end, cooling water ports (4,5) at each end, outer tread lug cavities (2) in one half of a mold assembly, inner guide lug cavities (1) in the other half of the mold assembly and a pair of fully supporting indexing wheels (8) on opposing ends of the mold assemblies (A,B);
a) placing a green track belt carcass (7) in between the mold halves and around the indexing wheels (8), the green track belt carcass (7) having a slab (9) of tread lug compound built-up on the outer surface and a slab of inner guide lug compound (10) built-up on the inner surface thereof; wherein the slab stocks are applied as single pieces or as a continuous sheet of rubber repeatably wrapped around the outer and inner surfaces;
b) turning on the water at all cooling ports (4,5);
c) closing the mold halves at such a designated high pressure to form the tread lugs (2) and inner guide lugs (1) in a series of alternating bumps between high pressure and a much lower or no pressure to form the lugs (1,2);
d) applying a constant lower pressure to allow the lugs (1,2) to expand into the cavities (1,2) and the molds to separate until the first heat is complete;
e) opening the mold halves and indexing the belt (7) a distance x which is less than the length of the molds unt the lugs that were formed in the cavities (1,2) next to the cold entrance end are aligned with the cavities at the exit end;
f) shutting off the cooling water port (5) at the exit end of the molds;
g) repeating steps c, d and e to form the second and subsequent heats prior to the final heat, proceeding to step (h) for the final heat;
h) shutting off the cooling water port (4) at the entrance end of the molds;
i) repeating steps c and d to form the final belt; and
j) opening the mold halves and removing the track belt from the mold assemblies.

8. The method according to claim 7 wherein the high pressure is between 1.4 and MPa of 8.

9. The method of claim 7 wherein the high pressure is between 2.0 MPa - 3.3 MPa.

10. The method according to claim 7 wherein the lower pressure is between 0.35 MPa - 1.3 MPa.

11. The method according to claim 8 wherein the lower pressure is between 0.35 MPa - 1.3 MPa.

12. The method according to claim 9 wherein the lower pressure is between 0.5 MPa - 1.0 MPa.

13. The method of curing endless track belts comprising:
a) providing a pair of upper and lower heated mold assemblies (A,B) having an entrance end, an exit end, cooling water ports (4,5) at each end, outer tread lug cavities (2) in one half of a mold assembly, inner guide lug cavities (1) in the other half of the mold assembly and a pair of fully supporting indexing wheels (8) on opposing ends of the mold assemblies (A,B);
b) placing a green track belt carcass (7) in-between the mold halves and around the indexing wheels (8);
c) placing non-preformed slugs of inner lug compound (10) in the inner guide lug cavities (1) of the upper mold assembly (A) and on the carcass (7) opposite the guide lug cavities (1) of the lower mold assemblies (B) and slugs (9) of tread lug compound in the tread lug cavities (2) of the lower mold assembly (A) on the carcass (8) opposite the tread lug cavities (2) of the upper mold assemblies (A);
d) turning on the water to all cooling ports (4,5);
e) closing the mold halves at such a designated high pressure to form the tread lugs (2) and guide lugs (1) in a series of alternating bumps between high pressure and a much lower or no pressure to form the lugs (1,2);
f) applying a constant lower pressure to allow the lugs (1,2) to expand into the cavities (1,2) and the molds to separate until the first heat is complete;
g) opening the mold halves and indexing the belt (7) a distance x which is less than the length of the molds until the lugs (1,2) that were formed in the cavities (1,2) next to the cold entrance end are aligned with the cavities at the exit end;
h) shutting off the cooling water port (5) at the exit end of the molds;
i) placing additional slugs of guide lug compound (10) in the empty cavities (1) of the upper mold (A) and on the carcass (7) opposite the empty cavities (1) of the lower mold (B) and placing additional slugs (9) of tread lug compound in the empty cavities (2) of the lower mold (B) and on the carcass (7) opposite the empty cavities (1) of the upper mold (A) and repeating steps e, f and g for the second and subsequent heats prior to the final heat, proceeding to step (j) for the final heat;
j) shutting off the cold water port (4) to the entrance ends of the molds;
k) placing additional slugs of guide lug compound (10) in the empty cavities of the upper mold (A) and on the carcass (7) opposite the empty cavities (1) of the lower mold (B) and placing additional slugs (9) of tread lug compound in the empty cavities (2) of the lower mold (B) and on the carcass (7) opposite the empty cavities (2) of the upper mold (A) and repeating steps e and f to form the final track belt; and
k) opening the mold halves and removing the track belt from the mold assemblies.

14. The method according to claim 13 wherein the high pressure is between 1.4 and MPa of 8.

15. The method of claim 13 wherein the high pressure is between 2.0 MPa - 3.3 MPa's.

16. The method according to claim 13 wherein the lower pressure is between 0.35 MPa - 1.3 MPa.

17. The method according to claim 14 wherein the lower pressure is between 0.35 MPa - 1.3 MPa.

18. The method according to claim 15 wherein the lower pressure is between 0.5 MPa - 1.0 MPa.

19. An apparatus for curing large endless rubber track belts having:
a) a pair of double platen mold assemblies (A,B) having outer tread lug cavities (2), inner guide lug cavities (1), entrance ends, exit ends and cooling water ports (4,5) at each end;
b) pressure cylinders to impart a cavity pressure of 1.4 to 8.4 MPa; and
c) fully supporting indexing wheels (8); wherein the indexing wheels provide support across the entire width of the belt with a force sufficient to maintain an even tension across the width of the belt to support the inner reinforcement (12) and not allow it to move during the curing cycle, the apparatus **characterized by**;
an indexing wheel (8) having a round drum (15) with removable shelves (16) and secondary support surfaces (17), the removable shelves (16) providing support for the green belt carcass (7) that is tensioned prior to and during the first heat, absent the presence of inner guide lugs (1) and; wherein the shelves (16) are removed after the first heat, when inner guide lugs (1) are present, to allow the inner guide lugs (1) to enter the cavity and the bottom (11) of the guide lugs (1) are supported by the secondary surface 17.

20. The apparatus according to claim 19 wherein the force applied by the fully supporting indexing wheels is 0.14 to 3.5 MPa.

## Patentansprüche

1. Verfahren zum Härten endloser Raupenriemen, das umfasst:
a) dass ein Paar obere und untere beheizte Form-Anordnungen (A, B) mit einem Eingangsende, einem Ausgangsende, Kühlwasser-Anschlüssen (4, 5) an jedem Ende, äußeren Laufflächenstollen-Hohlräumen (2) in einer Hälfte einer Form-Anordnung, inneren Führungszahn-Hohlräumen (1) in der anderen Hälfte der Form-Anordnung, und ein Paar vollständig abstützende Vorschubräder (8) an einander gegenüberliegenden Enden der Form-Anordnungen (A, B) geschaffen wird;
b) dass eine Roh-Raupenriemenkarkasse (7) zwischen die Formhälften und um die Vorschubräder (8) eingesetzt wird, wobei die Roh-Raupenriemenkarkasse (7) eine auf der Außenfläche derselben aufgebaute Schicht aus Laufflächenstollenmasse aufweist, wobei das Schicht-Lagermaterial als Einzelstücke oder als eine wiederholt um die Außenfläche geschlagene kontinuierliche Kautschuk-Schicht aufgelegt wird;
c) dass nicht vorgeformte Klötze aus Masse der inneren Führungszähne (10) in die inneren Führungszahn-Hohlräume der oberen Formanordnung (A) und an der Karkasse (7) gegenüber den Führungszahn-Hohlräumen (1) der unteren Formanordnung (B) eingesetzt werden;
d) dass das Wasser zu allen Kühlungsanschlüssen (4, 5) eingeschaltet wird;
e) dass die Formhälften bei einem dazu ausgelegten hohen Druck geschlossen werden, um die Laufflächenstollen (2) und die inneren Führungszähne (1) in einer Reihe abwechselnder Stöße zwischen hohem Druck und einem viel niedrigeren Druck oder Druck Null zu den Stollen bzw. Zähnen (1, 2) zu formen;
f) dass ein konstanter niedrigerer Druck angelegt wird, um die Stollen bzw. Zähne (1, 2) sich in die Hohlräume (1, 2) dehnen und die Formen trennen zu lassen, bis die erste Erwärmung abgeschlossen ist;
g) dass die Formhälften geöffnet werden und der Riemen (7) um einen Abstand x vorgeschoben wird, der geringer als die Länge der Formen ist, bis die in den dem kalten Eingangsende zunächst liegenden Hohlräumen (1, 2) geformten Stollen bzw. Zähnen (1, 2) mit den Hohlräumen an den Ausgangsenden ausgerichtet sind;
h) dass der Kühlwasseranschluss (5) am Ausgangsende der Formen geschlossen wird;
i) dass zusätzliche Klötze aus Masse der inneren Führungszähne (10) in die leeren Hohlräume (1) der oberen Form (A) und an die Karkasse (7) gegenüber den leeren Hohlräumen (1) der unteren Form (B) eingesetzt und die Schritte e, f und g für die zweiten und darauf folgenden Erwärmungen vor der abschließenden Erwärmung wiederholt werden und zu dem Schritt (j) für die abschließende Erwärmung weitergeschritten wird;
j) dass der Kühlwasseranschluss (4) zu den Eingangsenden der Formen geschlossen wird;
k) dass zusätzliche Klötze aus Masse der inneren Führungszähne (10) in die leeren Hohlräume der oberen Form (A) und an der Karkasse (7) gegenüber den leeren Hohlräumen (1) der unteren Form (B) eingesetzt und die Schritte e und f zum Formen des endgültigen Raupenriemens wiederholt werden; und
l) dass die Formhälften geöffnet werden und der Raupenriemen aus den Formanordnungen (A, B) entnommen wird.

2. Verfahren nach Anspruch 1, bei dem der hohe Druckwert zwischen 1,4 MPa und 8,4 MPa liegt.

3. Verfahren nach Anspruch 1, bei dem der hohe Druckwert zwischen 2,0 MPa und 3,3 MPa liegt.

4. Verfahren nach Anspruch 1, bei dem der untere Druckwert zwischen 0,35 MPa und 1,3 MPa liegt.

5. Verfahren nach Anspruch 2, bei dem der untere Druckwert zwischen 0,35 MPa und 1,3 MPa liegt.

6. Verfahren nach Anspruch 3, bei dem der untere Druckwert zwischen 0,5 MPa und 1,0 MPa liegt.

7. Verfahren zum Härten von Endlosraupenriemen, das umfasst:
dass ein Paar obere und untere beheizte Formanordnungen (A, B) mit einem Eingangsende, einem Ausgangsende, Kühlwasseranschlüssen (4, 5) an jedem Ende, äußeren Laufflächenstollen-Hohlräumen (2) in einer Hälfte einer Formanordnung, inneren Führungszahn-Hohlräumen (1) in der anderen Hälfte der Formanordnung und einem Paar voll abstützender Vorschubräder (8) an einander gegenüberliegenden Enden der Formanordnungen (A, B) geschaffen wird;
a) dass eine Roh-Riemenkarkasse (7) zwischen die Formhälften und um die Vorschubräder (8) eingesetzt wird, wobei die Roh-Riemenkarkasse (7) eine Schicht (9) aus Laufflächenstollenmasse an der Außenfläche aufgebaut und eine Schicht aus Masse der inneren Führungszähne (10) auf der inneren Fläche derselben aufgebaut besitzt; wobei die Schichtmaterialien als Einzelstücke oder als eine kontinuierliche Schicht von wiederholt um die Außen- und Innenflächen geschlagenem Kautschuk angelegt werden;
b) dass das Wasser an allen Kühlwasseranschlüssen (4, 5) eingeschaltet wird;
c) dass die Formhälften bei einem dazu ausgelegten hohen Druck geschlossen werden, um die Laufflächenstollen (2) und die inneren Führungszähne (1) in einer Reihe von abwechselnden Stößen zwischen hohem Druck und einem viel niedrigeren Druck oder Druck Null zu den Stollen bzw. Zähnen (1, 2) zu formen;
d) dass ein konstanter niedriger Druck angelegt wird, um die Stollen bzw. Zähne (1, 2) sich in die Hohlräume (1, 2) dehnen und die Formen trennen zu lassen, bis die erste Erwärmung abgeschlossen ist;
e) dass die Formhälften geöffnet werden und der Riemen (7) um einen Abstand x vorgeschoben wird, der geringer als die Länge der Formen ist, bis die in den dem kalten Eingangsende zunächst liegenden Hohlräumen (1, 2) geformten Stollen bzw. Zähne mit den Hohlräumen an den Ausgangsenden ausgerichtet sind;
f) dass der Kühlwasseranschluss (5) am Ausgangsende der Formen geschlossen wird;
g) dass die Schritte c, d und e zum Bilden der zweiten und darauf folgenden Erwärmungen vor der abschließenden Erwärmung wiederholt werden, und zum Schritt (h) für die abschließende Erwärmung fortgeschritten wird;
h) dass der Kühlwasseranschluss (4) am Eingangsende der Formen geschlossen wird;
i) dass die Schritte c und d zum Formen des endgültigen Riemens wiederholt werden und
j) dass die Formhälften geöffnet werden und der Raupenriemen aus den Formanordnungen entnommen wird.

8. Verfahren nach Anspruch 7, bei dem die hohen Druckwerte zwischen 1,4 und einem MPa von 8 liegen.

9. Verfahren nach Anspruch 7, bei dem die hohen Druckwerte zwischen 2,0 MPa und 3,3 MPa liegen.

10. Verfahren nach Anspruch 7, bei dem der untere Druckwert zwischen 0,35 MPa und 1,3 MPa liegt.

11. Verfahren nach Anspruch 8, bei dem der untere Druckwert zwischen 0,35 MPa und 1,3 MPa liegt.

12. Verfahren nach Anspruch 9, bei dem der untere Druckwert zwischen 0,5 MPa und 1,0 MPa liegt.

13. Verfahren zum Härten endloser Raupenriemen, das umfasst:
a) dass ein Paar obere und untere beheizte Formanordnungen (A, B) mit einem Eingangsende, einem Ausgangsende, Kühlwasseranschlüssen (4, 5) an jedem Ende, äußeren Laufflächenstollen-Hohlräumen (2) in einer Hälfte einer Formanordnung, inneren Führungszahn-Hohlräumen (1) in der anderen Hälfte der Formanordnung und einem Paar voll abstützender Vorschubräder (8) an einander gegenüberliegenden Enden der Formanordnungen (A, B) geschaffen wird;
b) dass eine Roh-Raupenriemenkarkasse (7) zwischen die Formhälften und um die Vorschubräder (8) eingesetzt wird;
c) dass nicht vorgeformte Klötze aus Masse der inneren Zähne (10) in die inneren Führungszahn-Hohlräume (1) der oberen Formanordnung (A) und an der Karkasse (7) gegenüber den Führungszahn-Hohlräumen (1) der unteren Formanordnung (B), und Klötze (9) aus Laufflächenzahnmasse in die Laufflächenzahn-Hohlräume (2) der unteren Formanordnung (A) an der Karkasse (8) gegenüber den Laufflächenzahn-Hohlräumen (2) der oberen Formanordnungen (A) eingesetzt werden;
d) dass das Wasser zu allen Kühlanschlüssen (4, 5) eingeschaltet wird;
e) dass die Formhälften bei einem dazu ausgelegten hohen Druck geschlossen werden, um die Laufflächenstollen (2) und die inneren Führungszähne (1) in einer Reihe von abwechselnden Stößen zwischen hohem Druck und einem viel niedrigeren Druck oder Druck Null zu den Stollen bzw. Zähnen (1, 2) zu formen;
f) dass ein konstanter niedriger Druck angelegt wird, um die Stollen bzw. Zähne (1, 2) sich in die Hohlräume (1, 2) dehnen und die Formen trennen zu lassen, bis die erste Erwärmung abgeschlossen ist;
g) dass die Formhälften geöffnet und der Riemen (7) um einen Abstand x vorgeschoben wird, der kleiner als die Länge der Formen ist, bis die in den Hohlräumen (1, 2) zunächst dem kalten Eingangsende geformten Stollen bzw. Zähne (1, 2) mit den Hohlräumen am Ausgangsende ausgerichtet sind;
h) dass der Kühlwasseranschluss (5) am Ausgangsende der Formen geschlossen wird;
i) dass zusätzliche Klötze aus Führungszahnmasse (10) in die leeren Hohlräume (1) der oberen Form (A) und an der Karkasse (7) gegenüber den leeren Hohlräumen (1) der unteren Form (B) und zusätzliche Klötze (9) aus Laufflächenstollenmasse in die leeren Hohlräume (2) der unteren Form (B) und an der Karkasse (7) gegenüber den leeren Hohlräumen (1) der oberen Form (A) eingesetzt werden, die Schritte e, f und g für die zweiten und darauf folgenden Erwärmungen vor der abschließenden Erwärmung wiederholt werden und zum Schritt (j) für die abschließende Erwärmung fortgeschritten wird;
j) dass der Kaltwasseranschluss (4) zu den Eingangsenden der Formen geschlossen wird;
k) dass zusätzliche Klötze aus Führungszahnmasse (10) in die leeren Hohlräume der oberen Form (A) und an die Karkasse (7) gegenüber den leeren Hohlräumen (1) der unteren Form (B) und zusätzliche Klötze (9) aus Laufflächenstollenmasse in die leeren Hohlräume (2) der unteren Form (B) und an die Karkasse (7) gegenüber den leeren Hohlräumen (2) der oberen Form (A) eingesetzt werden, und die Schritte e und f zum Formen des endgültigen Raupenriemens wiederholt werden; und
k) die Formhälften geöffnet werden und der Raupenriemen von den Formanordnungen entnommen wird.

14. Verfahren nach Anspruch 13, bei dem der hohe Druckwert zwischen 1,4 und MPa von 8 liegt.

15. Verfahren nach Anspruch 13, bei dem der hohe Druckwert zwischen 2,0 MPa und 3,3 MPa liegt.

16. Verfahren nach Anspruch 13, bei dem der untere Druckwert zwischen 0,35 MPa und 1,3 MPa liegt.

17. Verfahren nach Anspruch 14, bei dem der untere Druckwert zwischen 0,35 MPa und 1,3 MPa liegt.

18. Verfahren nach Anspruch 15, bei dem der untere Druckwert zwischen 0,5 MPa und 1,0 MPa liegt.

19. Vorrichtung zum Härten großer endloser Kautschuk-Raupenriemen mit:
a) einem Paar von Doppelplatten-Formanordnungen (A, B) mit äußeren Laufflächenstollen-Hohlräumen (2), inneren Führungszahn-Hohlräumen (1), Eingangsenden, Ausgangsenden und Kühlwasseranschlüssen (4, 5) an jedem Ende;
b) Druckzylindern zum Erteilen eines Hohlraumdruckes von 1,4 bis 8,4 MPa; und
c) vollständig abstützenden Vorschubrädern (8); wobei die Vorschubräder eine Abstützung über die gesamte Breite des Riemens mit einer Kraft schaffen, die ausreicht, um eine gleichmäßige Zugspannung über die Breite des Riemens zum Abstützen der inneren Verstärkungen (12) aufrecht zu erhalten und keine Bewegung derselben während des Vulkanisierungszyklus zulassen, wobei die Vorrichtung **gekennzeichnet ist durch**:
ein Vorschubrad (8) mit einer runden Trommel (15) und abnehmbaren Deckschichten (16) und sekundären Stützflächen (17), welche entfernbaren Deckschichten (16) eine Abstützung für die Roh-Riemenkarkasse (7) schaffen, die vor und während der ersten Erwärmung unter Zugspannung gesetzt wird, in Abwesenheit der inneren Führungszähne (1); und wobei die Deckschichten (16) nach der ersten Erwärmung entfernt werden, wenn die inneren Führungszähne (1) vorhanden sind, um den inneren Führungszahn (1) das Eintreten in den Hohlraum zu erlauben, und die Böden (11) der Führungszähne (1) **durch** die sekundäre Fläche (17) abgestützt werden.

20. Vorrichtung nach Anspruch 19, bei der die an die voll abstützenden Vorschubräder angelegte Kraft 0,14 bis 3,5 MPa beträgt.

## Revendications

1. Procédé pour vulcaniser des bandes de chenilles sans fin comprenant le fait de :
a) procurer une paire d'assemblages de moules chauffés supérieur et inférieur (A, B) possédant une extrémité d'entrée, une extrémité de sortie, des orifices pour l'eau de refroidissement (4, 5) à chaque extrémité, des cavités (2) pour les barrettes de bande de roulement externes dans une moitié d'un assemblage de moule, des cavités (1) pour les barrettes de guidage internes dans l'autre moitié de l'assemblage de moule et une paire de roues d'indexage (8) procurant un support complet aux extrémités opposées des assemblages de moules (A, B) ;
b) placer une carcasse de bande de chenille non vulcanisée (7) entre les moitiés de moules et autour des roues d'indexage (8), la carcasse de bande de chenille non vulcanisée (7) possédant une plaque de mélange élaborée du composé de barrettes de la bande de roulement sur sa surface externe, dans lequel la plaque de mélange est appliquée sous la forme de pièces individuelles ou sous la forme d'une feuille continue de caoutchouc qui est enroulée de manière répétée autour de la surface externe ;
c) placer des ébauches non préformées du composé (10) pour les barrettes de guidage internes dans les cavités pour les barrettes de guidage internes d'un assemblage de moule supérieur (A) et sur la carcasse (7) face aux cavités (1) pour les barrettes de guidage de l'assemblage de moule inférieur (B) ;
d) ouvrir l'arrivée d'eau à tous les orifices de refroidissement (4, 5) ;
e) fermer les moitiés de moule sous une pression élevée de consigne pour former les barrettes de bande de roulement (2) et les barrettes de guidage internes (1) dans une série de secousses alternantes entre une pression élevée et une pression nettement inférieure ou nulle pour former les barrettes ;
f) appliquer une pression inférieure constante pour permettre aux barrettes (1, 2) de se répartir dans les cavités (1, 2) et aux moules de se séparer une fois que le premier chauffage est arrivé à son terme ;
g) ouvrir les moitiés de moule et indexer la bande (7) sur une distance x qui est inférieure à la longueur des moules une fois que les barrettes (1, 2), qui se sont formées dans les cavités (1, 2) à côté de l'extrémité d'entrée froide, sont disposées en alignement avec les cavités à l'extrémité de sortie ;
h) fermer l'orifice d'eau de refroidissement (5) à l'extrémité de sortie des moules ;
i) placer des plaques de mélange supplémentaires de composés de barrettes de guidage internes (10) dans les cavités vides (1) du moule supérieur (A) et sur la carcasse (7) face aux cavités vides (1) du moule inférieur (B) et répéter les étapes e, f et g pour le deuxième chauffage et les chauffages ultérieurs avant le chauffage final, et passer à l'étape (j) pour le chauffage final ;
j) fermer l'orifice d'eau froide (4) aux extrémités d'entrée des moules ;
k) placer des plaques de mélange supplémentaires de composés de barrettes de guidage internes (10) dans les cavités vides du moule supérieur (A) et sur la carcasse (7) face aux cavités vides (1) du moule inférieur (B) et répéter les étapes e et f pour former la bande de chenille finale ; et
l) ouvrir les moitiés de moules et retirer la bande de chenille des assemblages de moules (A, B).

2. Procédé selon la revendication 1, dans lequel la pression élevée s'élève entre 1,4 MPa et 8,4 MPa.

3. Procédé selon la revendication 1, dans lequel la pression élevée s'élève entre 2,0 MPa et 3,3 MPa.

4. Procédé selon la revendication 1, dans lequel la pression inférieure s'élève entre 0,35 MPa et 1,3 MPa.

5. Procédé selon la revendication 2, dans lequel la pression inférieure s'élève entre 0,35 MPa et 1,3 MPa.

6. Procédé selon la revendication 3, dans lequel la pression inférieure s'élève entre 0,5 MPa et 1,0 MPa.

7. Procédé pour vulcaniser des bandes de chenilles sans fin comprenant le fait de :
procurer une paire d'assemblages de moules chauffés supérieur et inférieur (A, B) possédant une extrémité d'entrée, une extrémité de sortie, des orifices pour l'eau de refroidissement (4, 5) à chaque extrémité, des cavités (2) pour les barrettes de bande de roulement externes dans une moitié d'un assemblage de moule, des cavités (1) pour les barrettes de guidage internes dans l'autre moitié de l'assemblage de moule et une paire de roues d'indexage (8) procurant un support complet aux extrémités opposées des assemblages de moules (A, B) ;
a) placer une carcasse de bande de chenille non vulcanisée (7) entre les moitiés de moules et autour des roues d'indexage (8), la carcasse de bande de chenille non vulcanisée (7) possédant une plaque de mélange élaborée (9) du composé de barrettes de la bande de roulement sur sa surface externe et une plaque de mélange élaborée du composé de barrettes de guidage internes (10) sur sa surface interne ; dans lequel les plaques de mélange sont appliquées sous la forme de pièces individuelles ou sous la forme d'une feuille continue de caoutchouc qui est enroulée de manière répétée autour des surfaces externe et interne ;
b) ouvrir l'arrivée d'eau à tous les orifices de refroidissement (4, 5) ;
c) fermer les moitiés de moule sous une pression élevée de consigne pour former les barrettes de bande de roulement (2) et les barrettes de guidage internes (1) dans une série de secousses alternantes entre une pression élevée et une pression nettement inférieure ou nulle pour former les barrettes (1, 2) ;
d) appliquer une pression inférieure constante pour permettre aux barrettes (1, 2) de se répartir dans les cavités (1, 2) et aux moules de se séparer une fois que le premier chauffage est arrivé à son terme ;
e) ouvrir les moitiés de moule et indexer la bande (7) sur une distance x qui est inférieure à la longueur des moules une fois que les barrettes (1, 2), qui se sont formées dans les cavités (1, 2) à côté de l'extrémité d'entrée froide, sont disposées en alignement avec les cavités à l'extrémité de sortie ;
f) fermer l'orifice d'eau de refroidissement (5) à l'extrémité de sortie des moules ;
g) répéter les étapes c, d et e pour la mise en oeuvre du deuxième chauffage et des chauffages ultérieurs avant le chauffage final, et passer à l'étape (h) pour le chauffage final ;
h) fermer l'orifice d'eau froide (4) aux extrémités d'entrée des moules ;
i) répéter les étapes c et d pour former la bande de chenille finale ; et
l) ouvrir les moitiés de moules et retirer la bande de chenille des assemblages de moules.

8. Procédé selon la revendication 7, dans lequel la pression élevée s'élève entre 1,4 MPa et 8,4 MPa.

9. Procédé selon la revendication 7, dans lequel la pression élevée s'élève entre 2,0 MPa et 3,3 MPa.

10. Procédé selon la revendication 7, dans lequel la pression inférieure s'élève entre 0,35 MPa et 1,3 MPa.

11. Procédé selon la revendication 8, dans lequel la pression inférieure s'élève entre 0,35 MPa et 1,3 MPa.

12. Procédé selon la revendication 9, dans lequel la pression inférieure s'élève entre 0,5 MPa et 1,0 MPa.

13. Procédé pour vulcaniser des bandes de chenilles sans fin comprenant le fait de :
a) procurer une paire d'assemblages de moules chauffés supérieur et inférieur (A, B) possédant une extrémité d'entrée, une extrémité de sortie, des orifices pour l'eau de refroidissement (4, 5) à chaque extrémité, des cavités (2) pour les barrettes de bande de roulement externes dans une moitié d'un assemblage de moule, des cavités (1) pour les barrettes de guidage internes dans l'autre moitié de l'assemblage de moule et une paire de roues d'indexage (8) procurant un support complet aux extrémités opposées des assemblages de moules (A, B) ;
b) placer une carcasse de bande de chenille non vulcanisée (7) entre les moitiés de moules et autour des roues d'indexage (8) ;
c) placer des ébauches non préformées du composé (10) pour les barrettes de guidage internes dans les cavités pour les barrettes de guidage internes d'un assemblage de moule supérieur (A) et sur la carcasse (7) face aux cavités (1) pour les barrettes de guidage de l'assemblage de moule inférieur (B) et des ébauches du composé pour les barrettes de bande de roulement dans les cavités (2) pour les barrettes de bande de roulement de l'assemblage de moule inférieur (B) sur la carcasse (7) face aux cavités (2) pour les barrettes de bande de roulement de l'assemblage de moule supérieur (A) ;
d) ouvrir l'arrivée d'eau à tous les orifices de refroidissement (4, 5) ;
e) fermer les moitiés de moule sous une pression élevée de consigne pour former les barrettes de bande de roulement (2) et les barrettes de guidage (1) dans une série de secousses alternantes entre une pression élevée et une pression nettement inférieure ou nulle pour former les barrettes (1, 2) ;
f) appliquer une pression inférieure constante pour permettre aux barrettes (1, 2) de se répartir dans les cavités (1, 2) et aux moules de se séparer une fois que le premier chauffage est arrivé à son terme ;
g) ouvrir les moitiés de moule et indexer la bande (7) sur une distance x qui est inférieure à la longueur des moules une fois que les barrettes (1, 2), qui se sont formées dans les cavités (1, 2) à côté de l'extrémité d'entrée froide, sont disposées en alignement avec les cavités à l'extrémité de sortie ;
h) fermer l'orifice d'eau de refroidissement (5) à l'extrémité de sortie des moules ;
i) placer des plaques de mélange supplémentaires de composés de barrettes de guidage internes (10) dans les cavités vides (1) du moule supérieur (A) et sur la carcasse (7) face aux cavités vides (1) du moule inférieur (B) et placer des plaques de mélange supplémentaires (9) de composés de barrettes de bande de roulement dans les cavités vides (2) du moule inférieur (B) et sur la carcasse (7) face aux cavités vides (1) du moule supérieur (A) et répéter les étapes e, f et g pour le deuxième chauffage et les chauffages ultérieurs avant le chauffage final, et passer à l'étape (j) pour le chauffage final ;
j) fermer l'orifice d'eau froide (4) aux extrémités d'entrée des moules ;
k) placer des plaques de mélange supplémentaires de composés de barrettes de guidage internes (10) dans les cavités vides du moule supérieur (A) et sur la carcasse (7) face aux cavités vides (1) du moule inférieur (B) et placer des plaques de mélange supplémentaires (9) de composés de barrettes de bande de roulement dans les cavités vides (2) du moule inférieur (B) et sur la carcasse (7) face aux cavités vides (1) du moule supérieur (A) et répéter les étapes e et f pour former la bande de chenille finale ; et
l) ouvrir les moitiés de moules et retirer la bande de chenille des assemblages de moules.

14. Procédé selon la revendication 13, dans lequel la pression élevée s'élève entre 1,4 MPa et 8,4 MPa.

15. Procédé selon la revendication 13, dans lequel la pression élevée s'élève entre 2,0 MPa et 3,3 MPa.

16. Procédé selon la revendication 13, dans lequel la pression inférieure s'élève entre 0,35 MPa et 1,3 MPa.

17. Procédé selon la revendication 14, dans lequel la pression inférieure s'élève entre 0,35 MPa et 1,3 MPa.

18. Procédé selon la revendication 15, dans lequel la pression inférieure s'élève entre 0,5 MPa et 1,0 MPa.

19. Appareil pour vulcaniser de larges bandes de chenilles en caoutchouc sans fin, possédant :
a) une paire d'assemblages de moules à double plateau (A, B) comportant des cavités (2) pour les barrettes externes de bande de roulement, des cavités (1) pour les barrettes de guidage internes, des extrémités d'entrée, des extrémités de sortie et des orifices d'eau de refroidissement (4, 5) à chaque extrémité ;
b) des cylindres de pression pour conférer une pression de cavité de 1,4 à 8,4 MPa ; et
c) des roues d'indexage (8) procurant un support complet ; dans lequel les roues d'indexage procurent un support sur toute la largeur de la bande avec une force suffisante pour maintenir une tension uniforme sur la largeur de bande dans le but de supporter le renforcement interne (12) et pour empêcher son déplacement au cours du cycle de vulcanisation, l'appareil étant **caractérisé par** :
une roue d'indexage (8) possédant un tambour de forme arrondie (15) comportant des plateaux amovibles (16) et des surfaces de support secondaire (17), les plateaux amovibles (16) procurant un support pour la carcasse de bande non vulcanisée (7) qui est soumise à une tension avant et pendant le premier chauffage, en l'absence des barrettes de guidage internes (1) et, dans lequel les plateaux (16) sont retirés après le premier chauffage lorsque les barrettes de guidage internes (1) sont présentes pour permettre aux barrettes de guidage internes (1) de pénétrer dans la cavité, la base (11) des barrettes de guidage (1) étant supportées par la surface secondaire (17).

20. Appareil selon la revendication 19, dans lequel la force exercée par les roues d'indexage procurant un support complet s'élève de 0,14 à 3,5 MPa.
